# EUROPÄISCHE PATENTSCHRIFT

(11) **EP 2 292 138 B1**
(45) Veröffentlichungstag und Bekanntmachung des Hinweises auf die Patenterteilung: **17.02.2016**
(21) Anmeldenummer: 10173673.4
(22) Anmeldetag: 23.08.2010
(51) Int. Cl.: A47L 15/00, A47L 15/42, A47L 15/48

(54) **Geschirrspülmaschine**
Dishwasher
Lave-vaisselle

(30) Priorität: 03.09.2009 DE 102009039847
(43) Veröffentlichungstag der Anmeldung: 09.03.2011
(73) Patentinhaber: BSH Hausgeräte GmbH, 81739 München (DE)
(72) Erfinder: Heißler, Heinz, 89407 Dillingen (DE); Rosenbauer, Michael, 86756 Reimlingen (DE)

(56) Entgegenhaltungen:
- EP-A1- 0 461 722
- EP-A2- 0 914 800
- WO-A1-2010/142569
- DE-A1- 2 730 489
- DE-A1- 10 046 347
- DE-A1-102007 041 305
- DE-A1-102007 059 517

## Beschreibung

Die vorliegende Erfindung betrifft eine Geschirrspülmaschine mit einem Spülbehälter zur Aufnahme von zu spülendem Geschirr und mit einer Warmwasserzulaufeinrichtung, die zum Beschicken des Spülbehälters mit Warmwasser von einer externen Warmwasserversorgung vorgesehen ist.

Bei modernen Geschirrspülmaschinen wird das zu spülende Geschirr in einem Spülbehälter unter Zuhilfenahme von Wasser nach einem üblicherweise auswählbaren Spülprogramm automatisch gereinigt. Dabei weist ein Spülprogramm üblicherweise mehrere aufeinander folgende Teilspülgänge auf, wobei das Wasser in Abhängigkeit von dem jeweiligen Teilspülgang mit Reinigungs- und/oder Zusatzstoffen versehen und auf eine für den jeweiligen Teilspülgang günstige Temperatur gebracht wird.

Ein typischer von einem Spülprogramm umgesetzter Spülgang umfasst insbesondere einen Vorspülgang, einen oder mehrere Reinigungsgänge, einen Klarspülgang und einen abschließenden Trocknungsgang.

Der Vorspülgang dient der Entfernung von gröberen Verschmutzungen vom Geschirr. Das Ablösen dieses gröberen Schmutzes erfolgt im Wesentlichen mechanisch, so dass auf Reinigungsmittel während der Vorspülphase in vielen Fällen verzichtet werden kann. Die Temperatur des Wassers kann dabei in einem weiten Bereich von beispielsweise 15°C bis 50°C schwanken.

Die nachfolgenden Reinigungsgänge dienen dem vollständigen Entfernen von Verschmutzungen. Hierzu wird dem Wasser Reinigungsmittel zugesetzt, dessen Reinigungswirkung üblicherweise dann am besten ist, wenn das Wasser erwärmt ist, insbesondere sich das Wasser auf einer Temperatur von ca. 40°C bis 55°C befindet.

Ein darauffolgender Klarspülgang dient insbesondere der Vermeidung von Flecken auf dem Geschirr, welche durch gelöste Stoffe im Wasser, wie beispielsweise Salz und/oder Kalk, entstehen könnten. Hierzu wird das Wasser während des Klarspülganges mit Klarspüler versetzt. Eine weitere Aufgabe des Klarspülganges besteht darin, den nachfolgenden Trocknungsgang vorzubereiten. So wird während des Klarspülganges das Geschirr aufgeheizt, indem besonders heißes Wasser, welches beispielsweise eine Temperatur von 60°C bis 70°C aufweist, verwendet wird. Im abschließenden Trocknungsgang verdunsten am heißen Geschirr anhaftende Wassertropfen und schlagen sich an der Innenseite des Spülbehälters aufgrund der dort herrschenden niedrigeren Temperatur ab.

Um das zum Spülen vorgesehene Wasser auf die erforderlichen Temperaturen zu bringen, ist es insbesondere im nordamerikanischen Raum üblich, den Spülbehälter mit Warmwasser von einer externen Warmwasserversorgung zu beschicken. Dafür vorgesehene Geschirrspülmaschinen weisen daher standardmäßig vorbereitet eine Warmwasserzulaufeinrichtung auf, welche mit der externen Warmwasserversorgung verbindbar ist. Derartige Geschirrspülmaschinen selbst weisen dann entweder keine oder allenfalls eine Heizung geringerer Leistung auf.

Bei mit vorgewärmtem Wasser betriebenen Geschirrspülmaschinen wird häufig während des Klarspülganges die für das Geschirr vorgesehene Temperatur aufgrund einer zu geringen Temperatur des über die Warmwasserzulaufeinrichtung zugeführten Wassers nicht erreicht. Die Eigenwärmekonvektion des Spülguts ist dann beim nachfolgenden Trocknungsgang zu gering, so dass sich gerade bei derartigen Geschirrspülmaschinen mit Warmwasseranschluss in vielen Fällen ein mangelhaftes Trocknungsergebnis ergibt.

Um dem Problem der mangelhaften Trocknung des gespülten Geschirrs zu begegnen, wäre z.B. eine Trocknungsheizung möglich, welche die Luft im Inneren des Spülbehälters während des Trocknungsvorganges beheizt. Bei vertretbarem Energieeinsatz kann jedoch so keine wesentliche Verbesserung der Trocknungsleistung erzielt werden. Weiterhin wären Abluftklappen oder Abluftlüfter möglich, mit deren Hilfe während des Trocknungsganges feuchte Luft aus dem Spülbehälter an die Umgebung abgegeben werden kann. Auch derartige Lösungen wären nicht zweckmäßig und zu aufwendig. Zudem würden sie wegen der erforderlichen Luftaustrittsöffnung einen Eingriff in das Design der Geschirrspülmaschine erfordern und das Geräuschniveau der Geschirrspülmaschine erheblich erhöhen. Darüber hinaus würde sich das Klima in dem die Geschirrspülmaschine umgebenden Raum durch die Abluft erheblich verschlechtern.

Aus der DE 10 2007 059 517 A1 ist eine Geschirrspülmaschine mit einer Spülkammer, einem als Wärmetauscher wirkenden Wasserspeicher und mit einer An-schlussleitung zum Befüllen des Wärmetauschers mit Frischwasser bekannt.

Aus der DE 100 46 347 A1 ist eine Geschirrspülmaschine mit einer Wasserzufuhreinrichtung bekannt, wobei die Wasserzufuhreinrichtung zwei Wasserzufuhrschläuche aufweist, deren stromaufwärtige Enden mit einer Kaltwasserversorgungsleitung bzw. einer Warmwasserversorgungsleitung verbunden sind und deren stromabwärtige Enden über eine Verzweigung mit einem einzigen Wasserauslass verbunden sind, welcher wiederum mit einem Wassereinlass der Geschirrspülmaschine verbunden ist.

Weitere Stand der Technik ist aus WO 2010/142569 (Stand den Technik gemäß Art. 54(3) EPÜ), DE 2730489 EP 0461722 und EP 0914 800 bekannt.

Aufgabe der vorliegenden Erfindung ist es, eine zum Betreiben mit vorgewärmtem Wasser ausgebildete Geschirrspülmaschine mit verbesserter Trocknung des Geschirrs bereitzustellen.

Die Aufgabe wird bei einer Geschirrspülmaschine gemäß Anspruch 1 gelöst.

Mit Hilfe des in wärmeleitendem Kontakt mit dem Spülbehälter stehenden Vorratsbehälters, der mit frischem Kaltwasser gefüllt ist, kann eine deutliche Abkühlung wenigstens eines Teiles der Wandung des Spülbehälters der Geschirrspülmaschine bewirkt werden. Auf diese Weise kann das Auskondensieren von Wasserdampf an der Innenseite des Spülbehälters und dadurch wiederum die Verdunstungsneigung von am Geschirr anhaftenden Wassertropfen erhöht werden, so dass das Trocknungsergebnis deutlich verbessert werden kann. Dies ist insbesondere bei der erfindungsgemäßen Geschirrspülmaschine vorteilhaft, wenn deren, insbesondere standardmäßig vorhandene, Warmwasserzulaufeinrichtung an eine externe Warmwasserversorgung, d.h. externe Warmwasserversorgungseinrichtung angeschlossen ist. Denn dann kann insbesondere beim jeweiligen Trocknungsgang des Spülgangs eines ablaufenden Geschirrspülprogramms durch eine Kaltwasserbefüllung des Vorratsbehälters ein größerer Temperaturunterschied zwischen dem Inneren des Spülbehälters mit dem dort eingebrachten Spülgut und der mit dem Vorratsbehälter in wärmeleitendem Kontakt stehenden Wandung erzeugt werden.

Dabei ist der konstruktive Zusatzaufwand bei einer erfindungsgemäßen Geschirrspülmaschine äußerst gering. Auch ist im laufenden Betrieb der Geschirrspülmaschine eine Erhöhung des Energiebedarfs ebenso wie eine Erhöhung des Außengeräusches vermieden. Weiterhin sind keine Eingriffe in das Design der Geschirrspülmaschine erforderlich.

Gemäß einer vorteilhaften Weiterbildung der Erfindung kann die Steuereinrichtung der erfindungsgemäßen Geschirrspülmaschine derart ausgebildet sein, dass insbesondere während eines Trocknungsgangs, d.h. für die Dauer eines Trocknungsgangs eines ablaufenden Spülprogramms der Vorratsbehälter mit Kaltwasser gefüllt, insbesondere voll befüllt ist. Dadurch lässt sich eine verbesserte Kondensations- und damit Trocknungswirkung im Spülbehälter sicherstellen, insbesondere wenn die Warmwasserzulaufeinrichtung der erfindungsgemäßen Geschirrspülmaschine an eine externe Warmwasserversorgung zur Befüllung mit Warmwasser für Teilspülgänge, wie z.B. Reinigungs- und/oder Klarspülgang, separat von der Kaltwasserzulaufeinrichtung angeschlossen ist.

Insbesondere kann es dazu zweckmäßig sein, wenn die Steuereinrichtung zur automatischen Steuerung eines Spülprogramms ausgebildet ist, bei dem zum oder nach dem Ende eines Klarspülgangs und/oder während eines Trocknungsgangs, insbesondere zu Beginn eines Trocknungsgangs, ein Steuerventil der Kaltwasserzulaufeinrichtung zumindest zeitweise geöffnet ist, um den Vorratsbehälter mit Kaltwasser zu beschicken, insbesondere zu befüllen.

Insbesondere kann es ggf. zweckmäßig sein, wenn die Steuereinrichtung den Auslauf des Vorratsbehälters derart steuert, dass vom Vorratsbehälter in den Spülbehälter für ein oder mehrere Teilspülgänge wie z.B. Vorspülgang eines ablaufenden Spülprogramms gespeichertes Kaltwasser spezifisch einfüllbar ist. Dazu wird der Auslauf des Vorratsbehälters geöffnet und Kaltwasser durch den Vorratsbehälter in den Spülbehälter "hindurchgeschleust".

Dem Vorratsbehälter ist ein steuerbarer Ablauf zugeordnet, der in den Spülbehälter mündet. Hierdurch ist es in einfacher Weise möglich, im Vorratsbehälter nicht mehr benötigtes Wasser über eine ohnehin vorhandene Pumpe zum Abpumpen von Wasser aus dem Spülbehälter abzupumpen. Dabei kann das aus dem Vorratsbehälter stammende Wasser zum Spülen von Geschirr in einem nachfolgenden, späteren Geschirrspülprogramm verwendet werden, bevor es endgültig aus der Geschirrspülmaschine abgepumpt wird. Hierdurch kann der Wasserverbrauch der Geschirrspülmaschine gesenkt werden. Dies ist insbesondere dann günstig, wenn die im Vorratsbehälter gespeicherte Kaltwassermenge bereits Raumtemperatur angenommen hat.

Insbesondere ist es zweckmäßig, wenn die Steuereinrichtung zur automatischen Steuerung eines Spülprogramms ausgebildet ist, bei dem zu Beginn des neu gewählten Spülprogramms ein Steuerventil des steuerbaren Ablaufs des Vorratsbehälters zumindest zeitweise geöffnet ist, um den Spülbehälter mit vom vorausgehenden Geschirrspülprogramm gespeicherten Wasser aus dem Vorratsbehälter zu beschicken. Dadurch kann in vorteilhafter insbesondere Wasser eingespart werden, das für den Trocknungsgang des früheren, vorausgehenden Geschirrspülprogramms im Vorratsbehälter als Kühlwasser bereitgestellt worden ist.

Ein Teilspülgang eines Spülprogramms, für den dieses im Vorratsbehälter zwischengespeicherte Wasser verwendete werden kann, ist im Regelfall ein Vorspülgang zu Beginn eines neu gestarteten Geschirrspülprogramms oder ein Reinigungsgang. Derartige Spülgänge werden bei vergleichsweise niedrigen Temperaturen durchgeführt. Das Wasser im Vorratsbehälter, welches aus einem vorangegangenen Spülprogramm stammt, weist nach einer ausreichend langen Verweilzeit nach Abschluss des vorausgehenden Geschirrspülprogramms bis zum Start eines neuen Geschirrspülprogramms in aller Regel in etwa Raumtemperatur auf. Eine derartige Temperatur ist in vielen Fällen ausreichend für einen ersten Spülgang eines Spülprogramms, so dass auf eine Beheizung oftmals verzichtet werden kann. Allenfalls ist ein vergleichsweise geringer Energieaufwand erforderlich, um eine gewünschte oder notwendige Solltemperatur zu erreichen. Anstelle der Verwendung der geschirrspülmaschineneigenen Heizung zum Erreichen der vorgesehenen Temperatur ist es auch möglich, das Wasser des Vorratsbehälters mit Wasser der externen Warmwasserversorgung zu mischen. Dies kann entweder im Spülbehälter über die separate Warmwasserzulaufeinrichtung erfolgen. Zusätzlich oder unabhängig hiervon kann die Warmwasserzulaufeinrichtung auch an den Vorratsbehälter angeschlossen sein, so dass die Mischung von Warmwasser und Kaltwasser entweder dort erfolgen kann oder bei dieser möglichen, zweckmäßigen Anschlussvariante auch im Spülbehälter, wenn sowohl die Steuerventile der Warmwasserzulaufeinrichtung und der Kaltwasserzulaufeinrichtung als auch das Ventil des Ablaufs des Vorratsbehälters geöffnet sind. Auf diese Weise kann bei allen vorteilhaften Anschlussvarianten die gewünschte Temperatur exakt eingestellt werden, so dass gegenüber einer Geschirrspülmaschine, welche ausschließlich mit Warmwasser der externen Warmwasserversorgung spült, eine Einsparung von Energie erzielt werden kann. Denn es kann nur soviel Warmwasser zugemessen werden, wie tatsächlich für den jeweiligen Teilspülgang eines Spülgangs benötigt wird. So wird bei ausschließlich mit Warmwasser betriebenen Geschirrspülmaschinen z.B. der erste Spülgang häufig mit einer derart hohen Temperatur durchgeführt, welche aus spültechnischer Sicht überhaupt nicht erforderlich ist.

Gemäß einer vorteilhaften Weiterbildung der Erfindung kann der Vorratsbehälter flächig an dem Spülbehälter anliegen. Auf diese Weise ist eine gute Wärmeübertragung vom Spülbehälter zum Vorratsbehälter möglich. Aufwendige Wärmeleitkomponenten sind nicht erforderlich. Hierdurch wird bei geringem konstruktiven Aufwand eine wesentliche Verbesserung des Trocknungsergebnisses der Geschirrspülmaschine erreicht.

Nach einer zweckmäßigen Weiterbildung der erfindungsgemäßen Geschirrspülmaschine kann der Vorratsbehälter an einer Seitenwand des Spülbehälters angeordnet sein. Die Seitenwand eines Spülbehälters ist hinreichend stabil, um auch einen gefüllten Vorratsbehälter zu tragen. Auf diese Weise ist es möglich, den Vorratsbehälter unmittelbar an dem Spülbehälter zu befestigen, was die Wärmeübertragung vom Spülbehälter zum Vorratsbehälter verbessert. Zudem ist die Seitenwand eines Spülbehälters insbesondere im Wesentlichen eben ausgebildet, so dass die Herstellung eines flächigen Kontaktes zwischen Vorratsbehälter und Spülbehälter in einfacher Weise möglich ist. So kann beispielsweise ein einfach herzustellender quaderförmiger Vorratsbehälter verwendet werden.

Gemäß einer vorteilhaften Weiterbildung der Erfindung kann der Vorratsbehälter ein Kunststoffteil sein. Insbesondere ist er aus Polypropylen und/oder Polyethylen hergestellt. Derartige Behälter können beispielsweise mittels geeigneter Extrudier- oder Gussverfahren mit geringem Fertigungsaufwand hergestellt werden. Zudem weisen aus Kunststoff gefertigte Vorratsbehälter eine gewisse Flexibilität auf, so dass sie sich bei geeigneter Befestigung, insbesondere wenn sie gefüllt sind, besonders gut an den Spülbehälter anschmiegen, was die Trocknung abermals verbessert. Selbstverständlich können für den Vorratsbehälter auch andere geeignet wärmeleitende Materialien wie z.B. metallische Werkstoffe, insbesondere Edelstahl verwendet sein.

Nach einer zweckmäßigen Weiterbildung der Erfindung kann der Vorratsbehälter an einem oberen Abschnitt des Spülbehälters angeordnet sein. Da in dem oberen Abschnitt des Spülbehälters während des Trocknungsganges höhere Temperaturen herrschen, als in einem unteren Abschnitt, wird auf diese Weise das Auskondensieren des Wasserdampfes im Spülbehälter weiter verbessert, was das Trocknungsergebnis weiter verbessert. Zudem ermöglicht die Anordnung des Vorratsbehälters an einem oberen Bereich des Spülbehälters, insbesondere mit einem Höhenabstand der Ablauföffnung des Vorratsbehälters über dem Boden des Spülbehälters, ein problemloses Entleeren des Vorratsbehälters nach Abschluss des Trocknungsganges mittels Schwerkraft.

Gemäß einer besonders bevorzugten Weiterbildung der Erfindung ist eine Steuereinrichtung zur automatischen Steuerung eines Spülprogramms ausgebildet, bei dem zum oder nach dem Ende eines Klarspülgangs und/oder während eines Trocknungsgangs, insbesondere zu Beginn eines Trocknungsgangs, ein Steuerventil der Kaltwasserzulaufeinrichtung zumindest zeitweise geöffnet ist, um den Vorratsbehälter mit Kaltwasser zu beschicken, insbesondere zu befüllen. Ein Trocknungsgang eines Spülprogramms schließt sich üblicherweise unmittelbar an einen Klarspülgang an. Während bei der Durchführung des Klarspülganges relativ heißes Klarspülwasser im Spülbehälter umgewälzt wird, findet während des Trocknungsganges keine Umwälzung von Wasser statt. Vielmehr wird bei Beginn des Trocknungsganges, oder kurz danach, das sich in einem unteren Bereich des Spülbehälters sammelnde Wasser aus der Geschirrspülmaschine abgepumpt. Wenn, wie vorgesehen, der Vorratsbehälter insbesondere erst während des Trocknungsganges, und nicht etwa davor, mit kaltem Wasser beschickt wird, so wird verhindert, dass sich das Wasser im Vorratsbehälter durch das heiße Klarspülwasser erwärmen kann. Prinzipiell kann das Beschicken des Vorratsbehälters durch Öffnen eines Steuerventils der Kaltwasserzulaufeinrichtung ab dem Beginn des Trocknungsganges erfolgen. Zweckmäßigerweise erfolgt das Befüllen des Vorratsbehälters insbesondere jedoch erst nach dem Abpumpen des warmen Klarspülwassers. Hierdurch wird eine signifikante Wärmemenge aus dem Spülbehälter transportiert, so dass das Wasser im Vorratsbehälter länger kalt bleibt und so seine kühlende Wirkung länger erhalten bleibt. Dabei ist es weiterhin günstig, wenn zwischen dem Ende des Abpumpens des Klarspülwassers und dem Beginn des Befüllens des Vorratsbehälters eine Programmpause bzw. Abtropfphase vorgesehen ist, um so ein Abtropfen von Spülwassertröpfchen an der Innenseite des Spülbehälters und am Geschirr zu ermöglichen, was letztendlich dazu führt, dass das nach der Abtropfphase in den Vorratsbehälter eingebrachte Wasser noch länger kalt bleibt, so dass die Trocknungsleistung abermals verbessert wird. Durch die Modifikation der an sich vorhandenen Steuereinrichtung zur Steuerung eines Steuerventils der Kaltwasserzulaufeinrichtung wird bei vertretbarem Aufwand insbesondere eine Vollautomatisierung des Beschickungsvorganges des Spülbehälters möglich. Ein manueller Eingriff durch einen Bediener ist nicht erforderlich, so dass der Bedienkomfort nicht beeinträchtigt ist.

Gemäß einer zweckmäßigen Weiterbildung der erfindungsgemäßen Geschirrspülmaschine ist der Vorratsbehälter zur Aufnahme eines Volumens von Kaltwasser ausgebildet, welches für einen Spülgang, beispielsweise für einen Vorspülgang oder für einen Reinigungsgang, eines Spülprogramms im Wesentlichen ausreichend ist. Insbesondere ist der Vorratsbehälter zur Aufnahme eines Volumens von Kaltwasser ausgebildet, welches der Bedarfs- Spülbadmenge für einen ersten Teilspülgang, insbesondere für einen Vorspülgang oder für einen Reinigungsgang, eines gewählten Spülprogramms weitgehend entspricht. Auf diese Weise kann die maximal mögliche Energieeinsparung erzielt werden.

In einem vorteilhaften Ausführungsbeispiel einer erfindungsgemäßen Geschirrspülmaschine mündet die Warmwasserzulaufeinrichtung insbesondere zusätzlich in den Vorratsbehälter. Auf diese Weise kann ein besonders einfacher Aufbau der Geschirrspülmaschine realisiert werden, wenn kein Kaltwasseranschluss zur Verfügung steht. So kann die Führung von Warmwasser und die Führung von Kaltwasser ab dem Vorratsbehälter über dieselben Einrichtungen, wie Leitungen, Ventile usw. erfolgen.

Gemäß einer vorteilhaften Weiterbildung der Erfindung ist der Warmwasserzulaufeinrichtung und/oder der Kaltwasserzulaufeinrichtung eine freie Fließstrecke zugeordnet. Die freie Fließstrecke bzw. die freien Fließstrecken können beispielsweise im Vorratsbehälter angeordnet sein. Durch die freien Fließstrecken wird ein Rücksaugen von Wasser in Richtung der Warmwasserversorgung bzw. der Kaltwasserversorgung vermieden, was bei einem durch dynamische Vorgänge entstehenden temporären Unterdruck eintreten könnte. Auf diese Weise kann insbesondere ein zu geringer Wasserstand im Vorratsbehälter und/oder im Spülbehälter vermieden werden.

Gemäß einem Ausführungsbeispiel der erfindungsgemäßen Geschirrspülmaschine kann ein externes oder geräteseitiges Verbindungsstück zum optionalen Anschließen der Warmwasserzulaufeinrichtung und der Kaltwasserzulaufeinrichtung an eine gemeinsame Wasserversorgung vorgesehen sein. Das Verbindungsstück kann dann zum Einsatz kommen, wenn an dem Ort, an dem die Geschirrspülmaschine betrieben werden soll, nur eine Wasserversorgung, d.h. ein einziger Typus von Wasseranschluss vorhanden ist. Sofern an dem jeweiligen Aufstellort der Geschirrspülmaschine jedoch eine Warmwasserversorgung und gleichzeitig eine Kaltwasserversorgung vorhanden sind, so wird das Verbindungsstück nicht verwendet. Das Verbindungsstück kann eingesetzt werden, wenn nur eine Kaltwasser- oder wenn nur eine Warmwasserversorgung vorhanden ist. Das Verbindungsstück ermöglicht also den Betrieb einer erfindungsgemäßen Geschirrspülmaschine an Orten, an denen dieses sonst nicht möglich wäre. Dabei sind keine grundsätzlichen Änderungen am Spülprogramm erforderlich. Ist die gemeinsame Wasserversorgung eine Kaltwasserversorgung, so steigt allerdings der Energiebedarf an. Ist weiterhin die gemeinsame Wasserversorgung eine Warmwasserversorgung, so kann eine Verschlechterung des Trocknungsergebnisses insbesondere dadurch vermieden werden, dass beim jeweiligen Trocknungsgang der Ablauf des Vorratsbehälters zum Durchlauf von Warmwasser in den Spülbehälter geöffnet wird, d.h. es findet dann keine Zwischenspeicherung von Wasser während des jeweiligen Trocknungsgangs statt. Insbesondere kann es natürlich zweckmäßig sein, bei fehlender Kaltwasserversorgung den Zulauf von Warmwasser über den Vorratsbehälter während des jeweiligen Trocknungsgangs mittels der Steuereinrichtung zu stoppen bzw. zu verhindern, indem das Steuerventil in der Warmwasserzulaufeinrichtung geschlossen wird.

Gemäß einer bevorzugten Ausführungsform der erfindungsgemäßen Geschirrspülmaschine ist die Steuereinrichtung zur Anpassung eines Spülprogramms bei fehlender Verbindung zwischen der Warmwasserzulaufeinrichtung und einer gemeinsamen Wasserversorgung oder bei fehlender Verbindung zwischen der Kaltwasserzulaufeinrichtung und einer gemeinsamen Wasserversorgung ausgebildet. Hierbei können Sensoren vorhanden sein, durch welche die Steuereinrichtung erkennt, ob die Warmwasserzulaufeinrichtung oder die Kaltwasserzulaufeinrichtung mit einer Wasserversorgung verbunden ist oder nicht. Bei den Sensoren kann es sich insbesondere um Durchlaufsensoren oder Drucksensoren handeln. Zudem können Temperatursensoren vorteilhaft sein, so dass auch erkannt werden kann, ob die jeweilige Wasserzulaufeinrichtung an eine Kaltwasserversorgung oder an eine Warmwasserversorgung angeschlossen ist. Die Anpassung des Spülprogramms kann insbesondere so erfolgen, dass bei einer nicht angeschlossenen Warmwasserversorgung Warmwasser durch Kaltwasser ersetzt wird, welches dann aufgeheizt wird. Bei fehlender Kaltwasserversorgung kann hingegen insbesondere der Schritt "Füllen des Vorratsbehälters mit Kaltwasser bzw. Ablassen des Kaltwassers aus dem Vorratsbehälter" entfallen. Der Vorratsbehälter wird in diesem Fall insbesondere in einen Durchlaufzustand durch Öffnen seines Ablaufs, insbesondere seines Ablaufsventils mittels der Steuereinrichtung gebracht. Auf diese Weise kann der Ablauf eines Spülprogramms optimiert und insbesondere verkürzt werden.

Allgemeiner ausgedrückt kann also die Steuereinrichtung das Steuerventil der Kaltwasserzulaufeinrichtung und/oder das Steuerventil der Warmwasserzulaufeinrichtung sowie den Auslauf des Vorratsbehälters zweckmäßigerweise derart steuern, dass für ein oder mehrere Teilspülgänge des Spülgangs eines gewählten Geschirrspülprogramms Kaltwasser und/oder Warmwasser den Vorratsbehälter durchläuft und in den Spülbehälter fließt.

Sonstige Aus- und Weiterbildungen der Erfindung sind in den Unteransprüchen wiedergegeben. Die vorstehend erläuterten und/oder die in den Unteransprüchen wiedergegebenen vorteilhaften Aus- sowie Weiterbildungen der Erfindung können dabei einzeln oder aber auch in beliebiger Kombination miteinander bei der erfindungsgemäßen Geschirrspülmaschine und dem erfindungsgemäßen Verfahren zur Anwendung kommen.

Die Erfindung, ihre Aus- sowie Weiterbildungen sowie deren Vorteile werden nachfolgend anhand von Zeichnungen erläutert.

Es zeigen:
- **Figur 1**: eine schematisierte räumliche Darstellung eines vorteilhaften Ausführungsbeispiels einer erfindungsgemäßen ausgebildeten und angeschlossenen Geschirrspülmaschine;
- **Figur 2**: eine erstes Funktionsdiagramm der Geschirrspülmaschine von Figur 1;
- **Figur 3**: ein vorteilhaftes Ablaufdiagramm zur Erläuterung der Funktion der Geschirrspülmaschine von Figur 2;
- **Figur 4**: ein modifiziertes Funktionsdiagramm eines zweiten vorteilhaften Ausführungsbeispiels einer erfindungsgemäß ausgebildeten Geschirrspülmaschine, und
- **Figur 5**: ein weiteres vorteilhaftes Ausführungsbeispiel einer erfindungsgemäß ausgebildeten Geschirrspülmaschine, welche in alternativer Weise angeschlossen ist.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

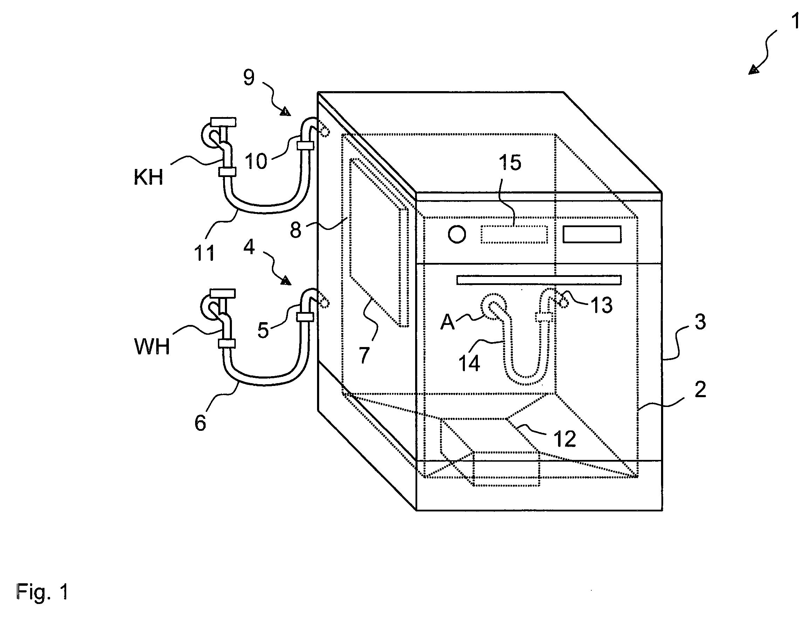

Figur 1 zeigt eine schematische räumliche Darstellung eines vorteilhaften Ausführungsbeispiels einer erfindungsgemäßen Geschirrspülmaschine 1. Diese weist einen Spülbehälter 2 auf, der durch eine Tür 3 verschließbar ist, so dass eine Spülzelle zum Spülen von Geschirr entsteht.

Auf der Rückseite der Geschirrspülmaschine 1 ist, wie bei den für den nordamerikanischen Markt vorgesehenen Geschirrspülmaschinen üblich, eine schematisch dargestellte Warmwasserzulaufeinrichtung 4 angeordnet. Diese weist ein Warmwasseranschlussstück 5 auf, an das ein Verbindungsschlauch 6 angeschlossen ist. Der Verbindungsschlauch 6 ist in vorgesehener Weise an eine externe Warmwasserversorgung WH angeschlossen. Der Anschluss erfolgt dabei, wie dargestellt, üblicherweise an einen Warmwasserhahn WH. Die Warmwasserzulaufeinrichtung 4 weist in der Figur 1 nicht gezeigte Bestandteile auf, welche es ermöglichen, Warmwasser vom Warmwasserhahn WH in den Spülbehälter 2 zu leiten.

Weiterhin weist die Geschirrspülmaschine 1 einen Vorratsbehälter 7 auf. Der Vorratsbehälter 7 ist an einer Seitenwand 8 des Spülbehälters 2 so angeordnet, dass eine Wärmeübertragung vom Spülbehälter auf den Vorratsbehälter möglich ist. Der Vorratsbehälter 7 ist als sehr flacher Quader ausgeformt. So beträgt seine Breite beispielsweise ca. 2 cm, so dass er ohne Weiteres an einer Seitenwand des Spülbehälters, insbesondere zwischen einer Seitenwand 8 des Spülbehälters 2 und einer Wand eines etwaig vorhandenen Außengehäuses der Geschirrspülmaschine 1, angeordnet werden kann. Das Außengehäuse kann ggf., insbesondere bei Einbau-Geschirrspülmaschinen, entfallen. Höhe und Tiefe des Spülbehälters können beispielsweise jeweils zwischen 40 und 50 cm betragen. Hierdurch kann ein Behältervolumen von beispielsweise 3 bis 4 I erzielt werden. Diese Menge ist ausreichend, um einen ersten Spülgang eines Spülprogramms allein mit Wasser aus dem Vorratsbehälter 7 durchzuführen. Aufgrund der flachen Bauweise ergibt sich eine große Kontaktfläche zwischen dem Spülbehälter 2 und dem Vorratsbehälter 7. Auf diese Weise ist eine gute Wärmeübertragung möglich.

Während der Spülbehälter 2 aus Edelstahl gefertigt sein kann, ist der Vorratsbehälter 7 vorzugsweise aus Kunststoff hergestellt. Der Vorratsbehälter kann insbesondere aus Polypropylen und/oder Polyethylen hergestellt sein, was ein preiswerter und leicht verarbeitbarer Kunststoff ist. So kann der Vorratsbehälter 7 in einfacher Weise durch Extrusionsverfahren oder Gussverfahren hergestellt sein. Alternativ kann es auch aus einem metallischen Werkstoff, insbesondere Edelstahl, oder einem sonstigen wärmeleitfähigem Werkstoff hergestellt sein. Da die Seitenwand 8 des Spülbehälters 2 im Wesentlichen eben ausgeführt ist, ist auch die nach Innen weisende Wärmekontaktfläche des Vorratsbehälters 7 eben ausgebildet und daher einfach herstellbar. Insbesondere wenn der Vorratsbehälter 7 gefüllt ist, schmiegt er sich aufgrund seiner materialbedingten Flexibilität besonders gut an den Spülbehälter 2 an. Hierdurch wird der Wärmeübergang abermals positiv beeinflusst.

Um den Vorratsbehälter 7 mit Kaltwasser füllen zu können, ist eine Kaltwasserzulaufeinrichtung 9 vorgesehen, welche ein Kaltwasseranschlussstück 10 umfasst. An dieses Kaltwasseranschlussstück 9 ist ein Verbindungsschlauch 11 angeschlossen, der mit einer externen Kaltwasserversorgung KH verbunden ist. Der Anschluss erfolgt auch hierbei wie üblich über einen Kaltwasserhahn KH der externen Kaltwasserversorgung KH. Die Kaltwasserzulaufeinrichtung 9 umfasst in der Figur 1 nicht gezeigte Mittel, welche ermöglichen, Kaltwasser vom Kaltwasserhahn KH in den Vorratsbehälter 7 zu füllen.

Wenn der Vorratsbehälter 7 während eines Trocknungsganges eines Spülprogramms der Geschirrspülmaschine 1 mit Kaltwasser gefüllt ist, so wird aufgrund des wärmeleitenden Kontaktes zwischen Vorratsbehälter 7 und Spülbehälter 2 die Innenseite der Seitenwand 8 des Spülbehälters 2 abgekühlt. Hierdurch wird eine Kondensation von im Spülbehälter 2 befindlichem Wasserdampf an der Seitenwand 8 verstärkt. Dies führt zu einem besseren Trocknungsergebnis bei der Durchführung des Spülprogramms. Der Vorratsbehälter 7 ist dabei zweckmäßigerweise an einem oberen Abschnitt des Spülbehälters 2 angeordnet, da dort im Regelfall höhere Temperaturen vorliegen, als in einem unteren Abschnitt, so dass die Abkühlung der Seitenwand gerade hier zu einer besonders guten Trocknungsleistung führt.

In einem unteren Bereich des Spülbehälters 2 ist ein Pumpentopf 12 vorgesehen. Im Pumpentopf 12 ist eine Pumpe zum Umwälzen von Wasser im Spülbehälter 2 während eines Spülganges vorgesehen. Dabei ist im Pumpentopf 12 oder an einer anderen Stelle im Flüssigkeitszirkulationssystem der Geschirrspülmaschine 1 eine Heizung zum Heizen des im Spülbehälter 2 befindlichen Wassers vorgesehen. Ebenso ist im Pumpentopf 12 eine Pumpe zum Abpumpen von Wasser, beispielsweise am Ende eines Spülganges, vorgesehen. Die verschiedenen Pumpfunktionen können jedoch auch durch eine einzige Pumpe in Verbindung mit schaltbaren Anschlussstücken und/oder Ausgangsstücken, insbesondere Ventilen wahrgenommen werden. Der Pumpentopf 12 ist dabei mit einem Abwasseranschlussstück 13 über nicht gezeigte Mittel so verbunden, dass Wasser aus dem Spülbehälter 2 über einen an das Abwasseranschlussstück 13 angeschlossenen Abwasserschlauch 14 in eine Abwassereinrichtung A, beispielsweise ein Abwasserrohr A, mittels einer Laugenpumpe gepumpt werden kann.

Die Geschirrspülmaschine 1 weist ferner eine Steuereinrichtung 15 zur Steuerung des Ablaufes eines Spülprogramms auf. In der Steuereinrichtung 15 können verschiedene Spülprogramme hinterlegt sein, welche durch einen Bediener auswählbar sind. Die Steuereinrichtung ist hier im Ausführungsbeispiel im Inneren der Tür 3 des Spülbehälters 2 angeordnet, könnte jedoch auch an anderer Stelle der Geschirrspülmaschine 1 angeordnet sein.

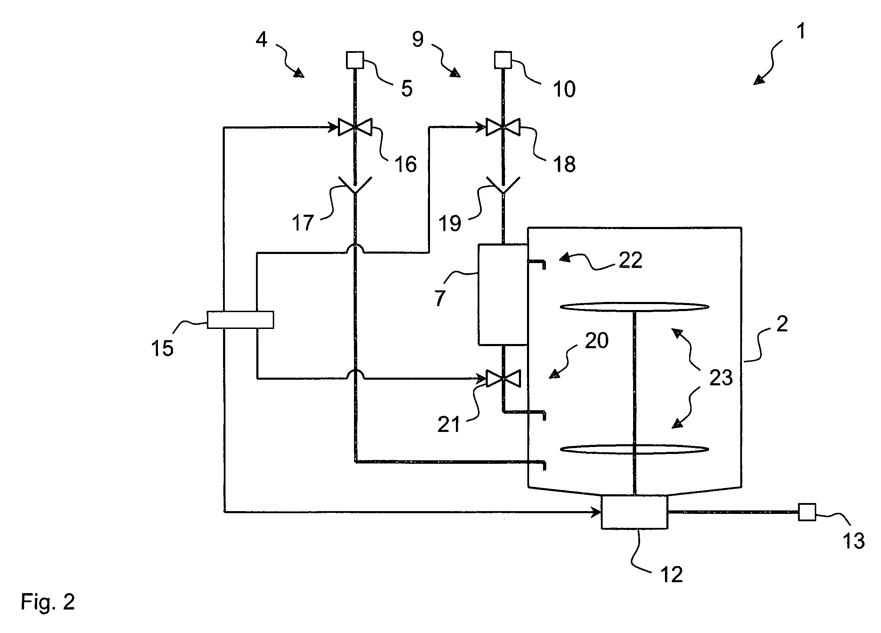

Figur 2 zeigt ein Funktionsdiagramm der Geschirrspülmaschine der Figur 1. Die Warmwasserzulaufeinrichtung 4 umfasst ein Steuerventil 16, welches durch die Steuereinrichtung 15 steuerbar ist. Das Steuerventil 16 der Warmwasserzulaufeinrichtung 4 ist stromabwärts des Warmwasseranschlussstückes 5 angeordnet. Auf diese Weise kann der Zufluss von Warmwasser zum Spülbehälter 2 in Abhängigkeit von dem ausgewählten Spülprogramm durch die Steuereinrichtung 15 gesteuert werden. Stromabwärts des Steuerventils 16 ist eine freie Fließstrecke 17 vorgesehen. Bei der freien Fließstrecke 17 handelt es sich um eine sogenannte Rohrunterbrechung, welche dazu dient, ein Rücksaugen von Wasser aus dem Spülbehälter 2 zu verhindern, falls in der externen Warmwasserversorgung durch dynamische Prozesse ein Unterdruck entsteht. Hierdurch wird verhindert, dass schmutziges Spülwasser in die Warmwasserversorgung gelangt.

Die Kaltwasserzulaufeinrichtung 9 umfasst ebenfalls ein Steuerventil 18, welches durch die Steuereinrichtung 15 steuerbar ist. Dieses Steuerventil 18 ist zwischen dem Kaltwasseranschlussstück 10 und einer weiteren freien Fließstrecke 19 angeordnet. Mittels des Steuerventils 18 ist es möglich, den Vorratsbehälter 7 mit Kaltwasser zu beschicken. Am unteren Ende des Vorratsbehälters 7 ist ein steuerbarer Ablauf 20 angeordnet, der in den Spülbehälter 2 mündet. Der steuerbare Ablauf 20 umfasst ein ebenfalls durch die Steuereinrichtung 15 steuerbares Steuerventil 21. Auf diese Weise ist es möglich, im Vorratsbehälter 7 befindliches Wasser in Abhängigkeit vom gewählten Spülprogramm in den Spülbehälter 2 strömen zu lassen. Um im Falle einer Störung, beispielsweise einer Störung des Steuerventils 21, ein Auslaufen von Wasser aus der Geschirrspülmaschine 1 zu verhindern, ist dem Vorratsbehälter 7 ein Überlauf 22 zugeordnet, der in den Spülbehälter 2 mündet.

Die elektrischen Komponenten, welche im Pumpentopf 12 angeordnet sind, werden ebenfalls durch die Steuereinrichtung 15 gesteuert. So kann im Spülbehälter 2 befindliches Wasser gezielt beheizt, über eine Sprüheinrichtung 23 umgewälzt sowie über das Abwasseranschlussstück 13 nach außen abgepumpt werden.

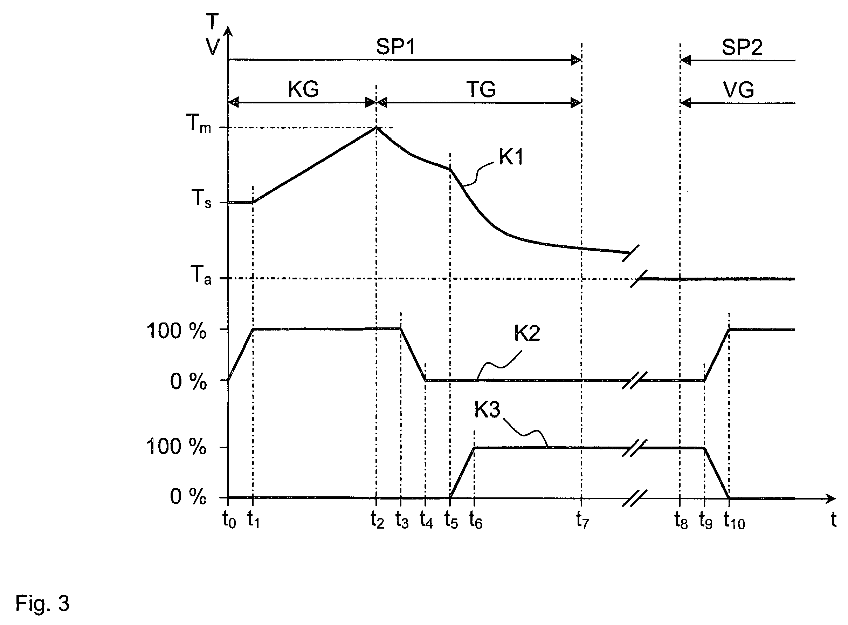

Figur 3 illustriert die Funktionsweise der erfindungsgemäßen Geschirrspülmaschine. In Figur 3 sind auf einer gemeinsamen Zeitachse t die Kurven K1, K2 und K3 dargestellt. Die Kurve K1 repräsentiert dabei die Temperatur der Innenseite der Seitenwand 8 des Spülbehälters 2 im Bereich des Vorratsbehälters 7. Die Kurve K2 stellt weiterhin die Menge des im Spülbehälter 2 befindlichen Wassers dar. Kurve K3 schließlich zeigt die Menge des sich im Vorratsbehälter 7 befindlichen Wassers. In Figur 3 ist eine Endphase eines ersten Spülprogramms SP1 und zeitlich versetzt davon eine Anfangsphase eines zweiten Spülprogramms SP2 dargestellt. Zum Zeitpunkt t₀ beginnt ein Klarspülgang KG des Spülprogramms SP1. Die Temperatur der Seitenwand 8 liegt dabei auf einem Startwert Tₛ, der im Wesentlichen der Spültemperatur eines vorangegangen Reinigungsganges entspricht. Der Spülbehälter 2 ist zum Zeitpunkt t₀ ebenso wie der Vorratsbehälter 7 entleert. Zum Zeitpunkt t₀ wird jedoch das Steuerventil 16 geöffnet, so dass Warmwasser in den Spülbehälter 2 mit einer bestimmten Einlauftemperatur einströmt. Dieser Vorgang dauert bis zum Zeitpunkt t₁ an, bei dessen Erreichen das Steuerventil 16 geschlossen wird.

Zum Zeitpunkt t₁ wird die Umwälzpumpe des Pumpentopfs 12 eingeschaltet. Falls die Einlauftemperatur des Warmwassers nicht einer gewünschten Soll-Klarspültemperatur entspricht wird ebenso eine Heizung im Flüssigkeitskreislaufsystem, insbesondere im Pumpentopf 12 zum Nachheizen eingeschaltet. Dies ist hier im Ausführungsbeispiel der Fall. Hierdurch steigt die Temperatur der Seitenwand 8 des Spülbehälters 2 allmählich bis zu einem Maximalwert Tₘ an, der zu einem Zeitpunkt t₂ erreicht wird. Zu diesem Zeitpunkt t₂ wird sowohl die Umwälzpumpe als auch die Heizung ausgeschaltet. Ab dem Zeitpunkt t₂ beginnt der Trocknungsgang TG. Wenn ein Großteil des mittels der Sprüheinrichtung 23 im Spülbehälters 2 verteilten Wassers abgelaufen ist, wird zum Ende des Klarspülgangs KG das sich im Pumpentopf 12 sammelnde Wasser nach außen abgepumpt, so dass der Spülbehälter 2 zum Zeitpunkt t₄ im Wesentlichen entleert ist. Durch das Abpumpen des relativ heißen Wassers des Klarspülganges KG wird eine wesentliche Menge von Wärmeenergie aus dem Spülbehälters 2 entfernt. Vom Zeitpunkt t₄ bis zum Zeitpunkt t₅ ist eine Programmpause bzw. Abtropfphase vorgesehen, welche dazu dient, dass sich noch im oberen Teil des Spülbehälters 2, insbesondere am zu reinigenden Spülgut und/oder Geschirrkörben befindliches Warmwasser im Pumpentopf 12 sammeln kann, so dass dem oberen Teil des Spülbehälters 2 weitere Wärmeenergie entzogen wird. Die Temperatur der Seitenwand 8 des Spülbehälters 2 nimmt vom Zeitpunkt t₂ bis t₅ in etwa logarithmisch ab. Dies liegt darin begründet, dass der Spülbehälter 2 in diesem Zeitraum nicht mehr beheizt wird, gleichzeitig die Seitenwand 8 des Spülbehälters 2 Wärme nach außen abgibt. Hierdurch kommt es zu einem Temperaturunterschied zwischen dem im Spülbehälter 2 befindlichen Geschirr und der Innenseite der Seitenwand 8. Auf diese Weise wird die Verdunstung von Wasser am Geschirr gefördert, welches dann an der relativ kalten Seitenwand 8 kondensiert und ablaufen kann. Die Verdunstung ist dabei umso besser, je mehr Wasser auskondensiert.

Um nun dieses Auskondensieren zu fördern, wird der Vorratsbehälter 7 beginnend im Zeitpunkt t₅, d.h. nach der Abtropfphase durch Öffnen des Steuerventils 18 mit Kaltwasser gefüllt. Hierdurch fällt die Kurve K1 ab dem Zeitpunkt t₅ steiler ab als zuvor. Nach vollständiger Füllung des Vorratsbehälters 7 zum Zeitpunkt t₆ wird das Steuerventil 18 wieder geschlossen. Zu einem Zeitpunkt t₇, der durch das Spülprogramm vorgegeben ist, wird der Trocknungsgang TG und das Spülprogramm SP1 insgesamt beendet. Aufgrund der Kühlung des Spülbehälters 2 mit Kaltwasser im Vorratsbehälter 7 vom Zeitpunkt t₅ bis zum Zeitpunkt t₇ kann ein hervorragendes Trocknungsergebnis erzielt werden.

Wenn der Bediener zu einem Zeitpunkt t₈ die Geschirrspülmaschine 1 erneut einschaltet, wird ein zweites Spülprogramm SP2 gestartet. Dieses Spülprogramm SP2 kann dem Ablauf des Spülprogramms SP1 entsprechen oder einen anderen Ablauf aufweisen. Zum Zeitpunkt t₈ entspricht die Temperatur des Spülbehälters 2 im Wesentlichen einer Umgebungstemperatur Tₐ. Der Spülbehälter 2 ist entleert und der Vorratsbehälter 7 gefüllt. Nach einer Initialisierungsphase bis zum Zeitpunkt t₉, bei der beispielsweise ein Selbsttest durchgeführt wird, öffnet die Steuereinrichtung 15 das Steuerventil 21. Hierdurch wird der Vorratsbehälter 7 entleert und der Spülbehälter 2 gefüllt. Zum Zeitpunkt t₁₀ wird dann die Umwälzpumpe des Pumpentopfs 12 in Gang gesetzt, so dass das eigentliche Vorspülen des Geschirrs beginnt. Durch die Verwendung von gespeichertem Wasser aus dem Vorratsbehälter 7 kann insgesamt Wasser gespart werden. Gleichzeitig ergibt sich eine Energieersparnis, da das Wasser aus dem Vorratsbehälter 7 im Wesentlichen eine Temperatur aufweist, welche der Außentemperatur entspricht und somit im Regelfall wärmer ist, als das Wasser einer gebäudeseitigen Kaltwasserversorgung. Das bedeutet, dass während des Vorspülganges VG auf ein Heizen des Wassers im Spülbehälter 2 im Regelfall verzichtet werden kann. Gleichzeitig braucht auch kein Warmwasser aus der externen Warmwasserversorgung entnommen zu werden. Es ergibt sich aber auch eine Energieeinsparung im Vergleich zu solchen Geschirrspülmaschinen, bei denen mit Warmwasser einer externen Warmwasserversorgung vorgespült wird. Warmwasser einer gebäudeseitigen Warmwasserversorgung weist nämlich im Regelfall eine derart hohe Temperatur auf, die zum Vorspülen während eines Vorspülganges VG gar nicht erforderlich ist.

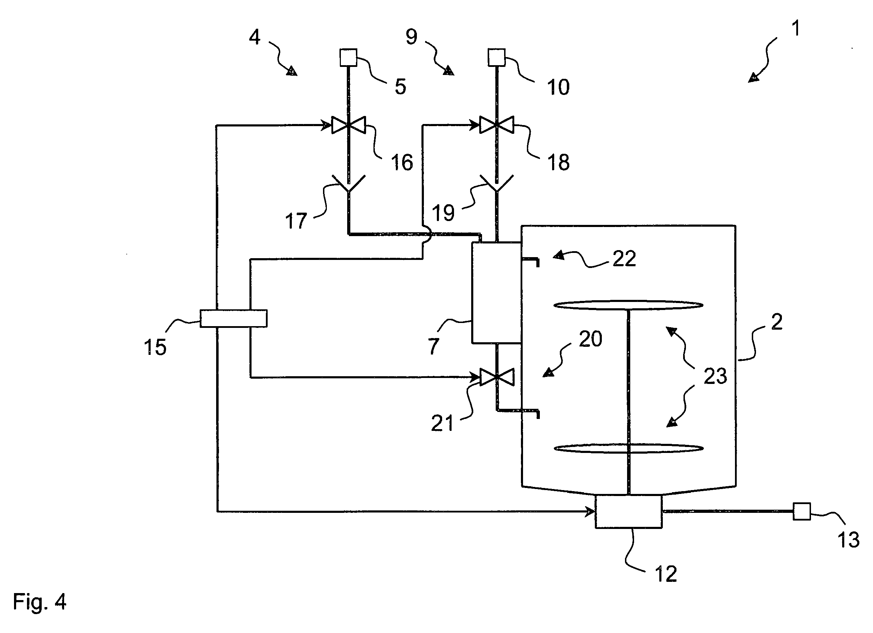

Figur 4 zeigt einen abgewandelten Funktionsplan einer erfindungsgemäßen Geschirrspülmaschine 1. Der wesentliche Unterschied zum anhand der Figur 2 besprochenen Ausführungsbeispiel besteht darin, dass das Warmwasser nicht unmittelbar in den Spülbehälter 2, sondern zunächst in den Vorratsbehälter 7 geführt wird. An den Vorratsbehälter 7 ist also zusätzlich zur Kaltwasserzulaufeinrichtung 9 auch die Warmwasserzulaufeinrichtung 4 angeschlossen. Hierdurch vereinfacht sich der konstruktive Aufbau der Geschirrspülmaschine 1. Der Betrieb der Geschirrspülmaschine 1 der Figur 4 erfolgt dabei nach dem anhand der Figur 3 erläuterten Prinzip. Der Vorratsbehälter 7 wird hierbei als Vorratsspeicher nur zum Bevorraten von Kaltwasser benutzt. Hinsichtlich des Warmwassers dient er hingegen lediglich als Durchlauf. Wenn also der Spülbehälter 2 mit Warmwasser befüllt werden soll, wird gleichzeitig das Steuerventil 16 der Warmwasserzulaufeinrichtung 4 und das Steuerventil 21 des Ablaufs 20 des Vorratsbehälters 7 geöffnet.

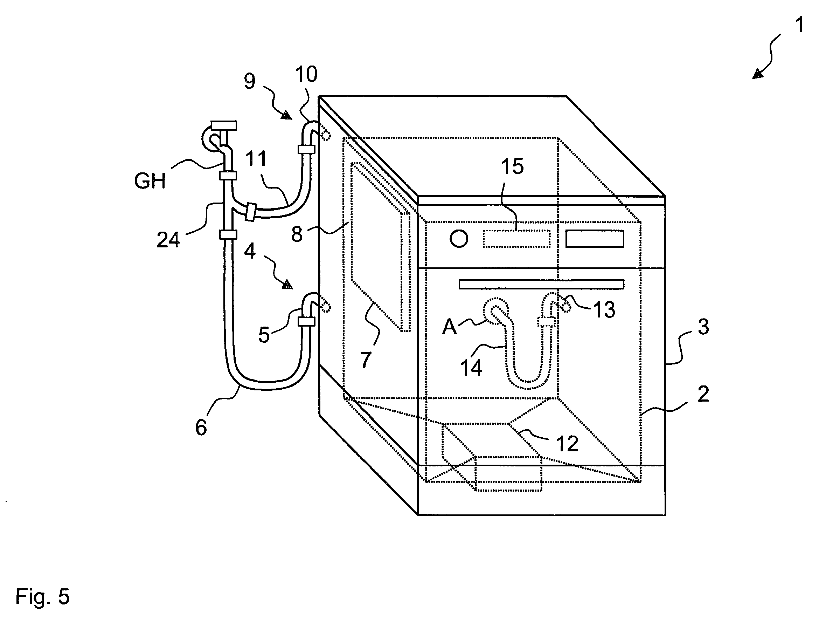

Figur 5 zeigt eine erfindungsgemäße Geschirrspülmaschine 1, wobei die Warmwasserzulaufeinrichtung 4 und die Kaltwasserzulaufeinrichtung 9 über ein externes oder geräteseitiges, insbesondere geräteinternes Verbindungsstück 24 an eine gemeinsame Wasserversorgung GH angeschlossen sind. Bei der gemeinsamen Wasserversorgung GH kann es sich um eine Kaltwasserversorgung oder eine Warmwasserversorgung handeln. Die Benutzung des Verbindungsstückes 24 ist dann sinnvoll, wenn im Bereich der Geschirrspülmaschine 1 nur eine Wasserversorgung wie z.B. nur eine Warmwasserversorgung vorhanden ist. Das Verbindungsstück 24 erlaubt den Betrieb der Geschirrspülmaschine 1 an Orten, an denen dies sonst nicht möglich wäre. Allerdings werden so die Vorteile der erfindungsgemäßen Geschirrspülmaschine nicht voll ausgeschöpft.

Insbesondere dann, wenn nur eine Warmwasserversorgung zur Verfügung steht und an diese die zum Spülbehälter 7 geführte Warmwasserzulaufeinrichtung 4 und die zum Vorratsbehälter 7 geführte Kaltwasserzulaufeinrichtung 9 angeschlossen sind, kann es zweckmäßig sein, wenn die Steuereinrichtung 15 das Steuerventil 18 der Kaltwasserzulaufeinrichtung 9 und das Steuerventil 16 der Warmwasserzulaufeinrichtung 4 sowie das Steuerventil 21 des Ablaufs 20 des Vorratsbehälters 7 beim jeweiligen Klarspülgang und insbesondere nachfolgenden Trocknungsgang öffnet, um zu vermeiden, dass während der Dauer des jeweiligen Trocknungsgangs zulaufendes Warmwasser bzw. Heißwasser im Vorratsbehälter zwischengespeichert wird. Dann fungiert der Vorratsbehälter nur als Durchlauf und nicht als Speicher. Wäre sein Ablauf hingegen gesperrt bzw. geschlossen und würde er somit zulaufendes Warmwasser speichern, so würde damit eine Beeinträchtigung oder Verschlechterung des Kondensationsvorgangs im Spülbehälter einhergehen.

Selbstverständlich kann es auch zweckmäßig sein, wenn die Steuereinrichtung 15 das Steuerventil 18 der Kaltwasserzulaufeinrichtung 9 und/oder das Steuerventil 16 der Warmwasserzulaufeinrichtung 4 sowie das Steuerventil 21 des Ablaufs 20 des Vorratsbehälters 7 derart steuert, dass für ein oder mehrere Teilspülgänge wie z.B. den Vorspülgang, Reinigungsgang und/oder Klarspülgang des Spülgangs eines gewählten Geschirrspülprogramms das Warmwasser aus der allein zur Verfügung stehenden externen Warmwasserversorgung den Vorratsbehälter 7 durchläuft und in den Spülbehälter 2 fließt und nicht im Vorratsbehälter gespeichert wird.

Umgekehrt kann es zweckmäßig sein, bei einer alleinig vorhandene Kaltwasserversorgung, an die dann sowohl die Kaltwasserzulaufeinrichtung 9 als auch die Warmwasserzulaufeinrichtung 4 angeschlossen ist, den Vorratsbehälter als Speicher für Kaltwasser beim jeweiligen Trocknungsgang zu benutzen, indem das Steuerventil 21 des Ablaufs 20 beim Trocknungsgang durch die Steuereinrichtung 15 geschlossen gehalten wird. Erst bei einem späteren, neu gestarteten Geschirrspülprogramm kann dann dieses gespeicherte Wasser für einen Teilspülgang wie z.B. Vorspülgang oder Reinigungsgang weiterverwendet werden, indem dann die Steuereinrichtung 15 das Steuerventil 21 des Ablaufs 20 öffnet.

### Bezugszeichenliste

- 1: Geschirrspülmaschine
- 2: Spülbehälter
- 3: Tür
- 4: Warmwasserzulaufeinrichtung
- 5: Warmwasseranschlussstück
- 6: Verbindungsschlauch
- 7: Vorratsbehälter
- 8: Seitenwand
- 9: Kaltwasserzulaufeinrichtung
- 10: Kaltwasseranschlussstück
- 11: Verbindungsschlauch
- 12: Pumpentopf
- 13: Abwasseranschlussstück
- 14: Abwasserschlauch
- 15: Steuereinrichtung
- 16: Steuerventil der Warmwasserzulaufeinrichtung
- 17: freie Fließstrecke der Warmwasserzulaufeinrichtung
- 18: Steuerventil der Kaltwasserzulaufeinrichtung
- 19: freie Fließstrecke der Kaltwasserzulaufeinrichtung
- 20: steuerbarer Ablauf
- 21: Steuerventil des steuerbaren Ablaufs
- 22: Überlauf
- 23: Sprüheinrichtung
- 24: Verbindungsstück

- A: Abwasserrohr
- GH: gemeinsame Wasserversorgung
- K1, K2, K3: Kurve
- KG: Klarspülgang
- KH: Kaltwasserversorgung, Kaltwasserhahn
- KS: Klarspülgang
- SP1, SP2: Spülprogramms
- TG: Trocknungsgang
- VG: Vorspülgang
- WH: Warmwasserversorgung, Warmwasserhahn
- t₀ - t₁₀: Zeitpunkte

## Patentansprüche

1. Geschirrspülmaschine, insbesondere Haushaltsgeschirrspülmaschine, mit einem Spülbehälter (2) zur Aufnahme von zu spülendem Geschirr, wobei sie einen Vorratsbehälter (7), der in wärmeleitendem Kontakt mit dem Spülbehälter (2) steht, und eine Kaltwasserzulaufeinrichtung (9) aufweist, die zum Beschicken des Vorratsbehälters (7) mit Kaltwasser aus einer externen Kaltwasserzulaufeinrichtung (9) vorgesehen ist, wobei eine Warmwasserzulaufeinrichtung (4), die zum Beschicken des Spülbehälters (2) mit Warmwasser aus einer externen Warmwasserversorgung (WH) vorgesehen ist, wobei eine Steuereinrichtung (15) zur automatischen Steuerung eines Spülprogramms (SP2) ausgebildet ist, bei dem zu Beginn des Spülprogramms (SP2) ein Steuerventil (21) eines steuerbaren Ablaufs (20) des Vorratsbehälters (7) zumindest zeitweise geöffnet ist, um den Spülbehälter (2) mit gespeichertem Wasser aus dem Vorratsbehälter (7) zu beschicken, **dadurch gekennzeichnet, dass** die Warmwasserzulaufeinrichtung (4) separat von der Kaltwasserzulaufeinrichtung (9) in den Spülbehälter (2) und/oder zusätzlich zur Kaltwasserzulaufeinrichtung (9) in den Vorratsbehälter (7) mündet.

2. Geschirrspülmaschine nach einem oder mehreren der vorstehenden Ansprüche, **dadurch gekennzeichnet, dass** der Vorratsbehälter (7) flächig an dem Spülbehälter (2), insbesondere an einer Seitenwand (8) des Spülbehälters (2), angeordnet ist.

3. Geschirrspülmaschine nach einem oder mehreren der vorstehenden Ansprüche, **dadurch gekennzeichnet, dass** die Steuereinrichtung (15) zur automatischen Steuerung eines Spülprogramms (SP1) ausgebildet ist, bei dem zum oder nach dem Ende eines Klarspülgangs (KG) und/oder während eines Trocknungsgangs (TG), insbesondere zu Beginn eines Trocknungsgangs (TG), ein Steuerventil (18) der Kaltwasserzulaufeinrichtung (9) zumindest zeitweise geöffnet ist, um den Vorratsbehälter (7) mit Kaltwasser zu beschicken, insbesondere zu befüllen.

4. Geschirrspülmaschine nach einem oder mehreren der vorstehenden Ansprüche, **dadurch gekennzeichnet, dass** der Vorratsbehälter (7) zur Aufnahme eines Volumens von Kaltwasser ausgebildet ist, welches der Bedarfs- Spülbadmenge für einen ersten Spülgang (VG), insbesondere für einen Vorspülgang (VG) oder für einen Reinigungsgang, eines gewählten Spülprogramms (SP2) weitgehend entspricht.

5. Geschirrspülmaschine nach einem oder mehreren der vorstehenden Ansprüche, **dadurch gekennzeichnet, dass** der Vorratsbehälter (7) einen Überlauf (22) aufweist, der in den Spülbehälter (2) mündet.

6. Geschirrspülmaschine nach einem oder mehreren der vorstehenden Ansprüche, **dadurch gekennzeichnet, dass** der Warmwasserzulaufeinrichtung (4) und/oder der Kaltwasserzulaufeinrichtung (9) eine freie Fließstrecke (16, 19) zugeordnet ist.

7. Geschirrspülmaschine nach einem oder mehreren der vorstehenden Ansprüche, **dadurch gekennzeichnet, dass** die Steuereinrichtung (15) derart ausgebildet ist, dass für die Dauer eines Trocknungsgangs (TG) eines ablaufenden Spülprogramms (SP1, SP2) der Vorratsbehälter (7) mit Kaltwasser gefüllt, insbesondere voll befüllt ist.

8. Geschirrspülmaschine nach einem oder mehreren der vorstehenden Ansprüche, **dadurch gekennzeichnet, dass** die Steuereinrichtung (15) das Steuerventil (18) der Kaltwasserzulaufeinrichtung (9) und/oder das Steuerventil (16) der Warmwasserzulaufeinrichtung (4) sowie den Auslauf (21) des Vorratsbehälters (7) derart steuert, dass für ein oder mehrere Teilspülgänge (VG) des Spülgangs eines gewählten Geschirrspülprogramms (SP1, SP2) Kaltwasser und/oder Warmwasser den Vorratsbehälter (7) durchläuft und in den Spülbehälter (2) fließt.

## Claims

1. Dishwasher, in particular a domestic dishwasher, having a washing container (2) for accommodating dishes to be washed, wherein it comprises a storage container (7), which is in thermally conductive contact with the washing container (2), and a cold-water intake fitting (9), which is provided for supplying the storage container (7) with cold water from an external cold-water intake fitting (9), wherein a hot-water intake fitting (4), which is provided for supplying the washing container (2) with hot water from an external hot water supply (WH) is provided, wherein a control device (15) is designed for automatic control of a wash program (SP2), in which, at the start of the wash program (SP2), a control valve (21) of a controllable outlet (20) of the storage container (7) is opened at least for a time in order to supply the washing container (2) with stored water from the storage container (7), **characterised in that** the hot-water intake fitting (4) leads separately from the cold-water intake fitting (9) into the washing container (2) and/or additionally to the cold-water intake fitting (9) into the storage container (7).

2. Dishwasher according to one or more of the preceding claims, **characterised in that** the storage container (7) is arranged in surface-contact with the washing container (2), in particular with a side wall (8) of the washing container (2).

3. Dishwasher according to one or more of the preceding claims, **characterised in that** the control device (15) is designed for automatic control of a wash program (SP1), in which at, or after, the end of a rinse cycle (KG) and/or during a drying cycle (TG), in particular at the start of a drying cycle (TG), a control valve (18) of the cold-water intake fitting (9) is opened at least for a time in order to supply, in particular to fill, the storage container (7) with cold water.

4. Dishwasher according to one or more of the preceding claims, **characterised in that** the storage container (7) is designed to hold a volume of cold water that is largely equal to the washing-bath volume required for a first wash cycle (VG), in particular for a prewash cycle (VG) or for a cleaning cycle, of a selected wash program (SP2).

5. Dishwasher according to one or more of the preceding claims, **characterised in that** the storage container (7) comprises an overflow (22) that leads into the washing container (2).

6. Dishwasher according to one or more of the preceding claims, **characterised in that** the hot-water intake fitting (4) and/or the cold-water intake fitting (9) is allocated an open flow length (16, 19).

7. Dishwasher according to one or more of the preceding claims, **characterised in that** the control device (15) is designed such that for the period of a drying cycle (TG) of a running wash program (SP1, SP2), the storage container (7) contains cold water, in particular is full of cold water.

8. Dishwasher according to one or more of the preceding claims, **characterised in that** the control device (15) controls the control valve (18) of the cold-water intake fitting (9) and/or the control valve (16) of the hot-water intake fitting (4) and the outlet (21) of the storage container (7) in such a way that for one or more partial wash cycles (VG) of the wash cycle of a selected dishwashing program (SP1, SP2), cold water and/or hot water flows through the storage container (7) and into the washing container (2).

## Revendications

1. Lave-vaisselle, en particulier lave-vaisselle ménager, avec une cuve de lavage (2) pour accueillir la vaisselle à laver, lequel présente un réservoir (7) en contact thermoconducteur avec la cuve de lavage (2) et un dispositif d'amenée d'eau froide (9) prévue afin d'alimenter le réservoir (7) en eau froide au départ d'un dispositif d'amenée d'eau froide (9) externe, dans lequel un dispositif d'amenée d'eau chaude (4) afin d'alimenter la cuve de lavage (2) en eau chaude au départ d'une alimentation en eau chaude (WH) externe est prévu, dans lequel un dispositif de commande (15) pour la commande automatique d'un programme de lavage (SP2) est exécuté et une soupape de commande (21) d'un écoulement commandable (20) du réservoir (7) est ouverte au moins par intermittence au début du programme de lavage (SP2), afin d'alimenter la cuve de lavage (2) en eau stockée au départ du réservoir (7), **caractérisé en ce que** le dispositif d'amenée d'eau chaude (4) débouche séparément du dispositif d'amenée d'eau froide (9) dans la cuve de lavage (2) et/ou en sus du dispositif d'amenée d'eau froide (9) dans le réservoir (7).

2. Lave-vaisselle selon l'une ou plusieurs des revendications précédentes, **caractérisé en ce que** le réservoir (7) est disposé à plat sur la cuve de lavage (2), en particulier sur une paroi latérale (8) de la cuve de lavage (2).

3. Lave-vaisselle selon l'une ou plusieurs des revendications précédentes, **caractérisé en ce que** le dispositif de commande (15) est exécuté pour la commande automatique d'un programme de lavage (SP1) dans lequel une soupape de commande (18) du dispositif d'amenée d'eau froide (9) est ouverte au moins par intermittence afin d'alimenter, en particulier de remplir le réservoir (7) en eau froide lors de ou après la fin d'un cycle de rinçage (KG) et/ou durant un cycle de séchage (TG), en particulier au début d'un cycle de séchage (TG).

4. Lave-vaisselle selon l'une ou plusieurs des revendications précédentes, **caractérisé en ce que** le réservoir (7) est exécuté afin d'accueillir un volume d'eau froide correspondant en grande partie à la quantité nécessaire au bain de lavage pour un premier cycle de lavage (VG), en particulier pour un cycle de prélavage (VG) ou pour un cycle de nettoyage d'un programme de lavage (SP2) sélectionné.

5. Lave-vaisselle selon l'une ou plusieurs des revendications précédentes, **caractérisé en ce que** le réservoir (7) présente un trop-plein (22) qui débouche dans la cuve de lavage (2).

6. Lave-vaisselle selon l'une ou plusieurs des revendications précédentes, **caractérisé en ce qu'**un tronçon d'écoulement libre (16, 19) est affecté au dispositif d'amenée d'eau chaude (4) et/ou au dispositif d'amenée d'eau froide (9).

7. Lave-vaisselle selon l'une ou plusieurs des revendications précédentes, **caractérisé en ce que** le dispositif de commande (15) est exécuté de telle manière à ce que le réservoir (7) soit rempli, en particulier intégralement rempli en eau froide pour la durée d'un cycle de séchage (TG) d'un programme de lavage en cours (SP1, SP2).

8. Lave-vaisselle selon l'une ou plusieurs des revendications précédentes, **caractérisé en ce que** le dispositif de commande (15) commande la soupape de commande (18) du dispositif d'amenée d'eau froide (9) et/ou la soupape de commande (16) du dispositif d'amenée d'eau chaude (4) ainsi que l'écoulement (21) du réservoir (7) de telle manière que pour un ou plusieurs cycles de lavage partiels (VG) du cycle de lavage d'un programme de lavage de vaisselle sélectionné (SP1, SP2), de l'eau froide et/ou de l'eau chaude traverse le réservoir (7) et s'écoule dans la cuve de lavage (2).
